# EUROPEAN PATENT APPLICATION

(11) **EP 4 197 765 A1**
(43) Date of publication of application: **21.06.2023**
(21) Application number: 21306816.6
(22) Date of filing: 16.12.2021
(51) Int. Cl.: B29D 11/00

(54) **METHOD FOR ENCAPSULATING A MICROSTRUCTURED LENS BY PIPC**

(71) Applicant: Essilor International, 94220 Charenton-Le-Pont (FR)
(72) Inventor: CHIU, Hao-Wen, Holden, MA 01520 USA (US); JALLOULI, Aref, Shrewsbury, MA 01545 USA (US)
(74) Representative: Jacobacci Coralis Harle

(57) **Abstract**

A method of forming an optical lens includes providing a first mold insert of a molding device having a contacting surface, the contacting surface including a plurality of inverted microstructures disposed on the contacting surface, each microstructure of the plurality of inverted microstructures having a shape inversely related to a shape of microstructures on a surface of a molded base lens; replacing the first mold insert with a second mold insert having a contacting surface thereof; applying a curable coating to a surface of the base lens having the microstructures formed thereon; pressing the contacting surface of the second mold insert into at least a portion of the curable coating applied to the surface of the base lens; and curing the curable coating into a curable layer, the microstructures being substantially entirely encapsulated in the curable layer.

## Description

### FIELD

The present disclosure relates to a method to encapsulate microstructures on a surface of a lens during injection molding.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Coatings of microstructured lenses can result in a deviation from the original microlens design, which may require several concept loops to reach a design compensation for each coating. This, in turn, may require longer development times and higher costs. In addition, some microstructured lenses, such as Pi-Fresnel, may not be coated by common methods such as dip or spin coating due to loss of optical design.

Aspects of the disclosure may address some of the above-described shortcomings in the art, particularly with the solutions set forth in the claims.

### SUMMARY

The present disclosure relates to a method of forming an optical lens, including: providing a first mold insert of a molding device having a contacting surface, the contacting surface including a plurality of inverted microstructures disposed on the contacting surface, each microstructure of the plurality of inverted microstructures having a shape inversely related to a shape of microstructures on a surface of a molded base lens; replacing the first mold insert with a second mold insert having a contacting surface thereof; applying a curable coating to a surface of the base lens having the microstructures formed thereon; pressing the contacting surface of the second mold insert into at least a portion of the curable coating applied to the surface of the base lens; and curing the curable coating into a curable layer, the microstructures being substantially entirely encapsulated in the curable layer. The present disclosure relates to a method of forming an optical lens as disclosed in claim 1. Advantageous aspects of the method according to the present disclosure are disclosed in claims 2 to 13. The present disclosure additionally relates to an optical element obtained according to the method of the present invention and in which the optical element of the invention is an ophthalmic lens.

The present disclosure additionally relates to a mold device, including: a first mold insert on a first mold side, the first mold insert including a contacting surface having a plurality of inverted microstructures formed thereon; a second mold insert on a second mold side; and a mold insert exchange mechanism including a third mold insert having a smooth contacting surface, the mold insert exchange mechanism configured to replace the first mold insert with the third mold insert on the first mold side. The present disclosure additionally relates to a mold device as disclosed in claim 15.

Note that this summary section does not specify every feature and/or incrementally novel aspect of the present disclosure or claimed invention. Instead, this summary only provides a preliminary discussion of different embodiments and corresponding points of novelty. For additional details and/or possible perspectives of the embodiments, the reader is directed to the Detailed Description section and corresponding figures of the present disclosure as further discussed below.

### BRIEF DESCRIPTION OF THE DRAWINGS

Various embodiments of this disclosure that are proposed as examples will be described in detail with reference to the following figures, wherein:
FIG. 1 is a schematic of a PIPC method for producing a lens with encapsulated microstructures, useful within the scope of the present disclosure.
FIG. 2 is an exemplary flow chart for a method of forming an ophthalmic lens, useful within the scope of the present disclosure.

### DETAILED DESCRIPTION

The following disclosure provides many different variations, or examples, for implementing different features of the provided subject matter. Specific examples of components and arrangements are described below to simplify the present disclosure. These are, of course, merely examples and are not intended to be limiting nor inoperable together in any permutation. Unless indicated otherwise, the features and embodiments described herein are operable together in any permutation. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "top," "bottom," "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. Inventive apparatuses may be otherwise oriented (rotated 90 degrees or at other orientations) and the spatially relative descriptors used herein may likewise be interpreted accordingly.

The order of discussion of the different steps as described herein has been presented for clarity sake. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

As previously mentioned, there may be a need to provide a microstructured lens that can be coated in a similar way to regular lenses with smooth surfaces, without affecting the added microstructure design. To that end, a post-injection press coating (PIPC) process can be used.

Described herein, a PIPC process is used to encapsulate the microstructures on the surface of a lens during injection molding. In particular, the PIPC process is coupled with a change of a mold insert, such as the concave insert, between the lens injection and the coating application steps.

The PIPC process is an in-mold coating method that includes injection molding a lens, then opening the mold to apply a coating or curable material onto the recently formed base lens surface, and closing the mold again to form the applied coating or curable material into a new coating on the formed base lens. In effect, the new coating is adhered onto the surface of the base lens. Parameters such as pressure, temperature, and hold duration can be adjusted based on properties of the coating or curable material applied onto the recently formed base lens. Notably, a surface of a mold insert proximal to the surface of the base lens may be smooth and thus yields a smooth base lens. Using this same smooth mold insert to form the smooth surface of the base lens may entail that the subsequently formed layer of the applied coating also has a smooth surface. As such, a method for providing expanded molding options during lens fabrication to enable microstructured surfacing of the base lens, and encapsulation of the microstructured surface, using PIPC is described herein.

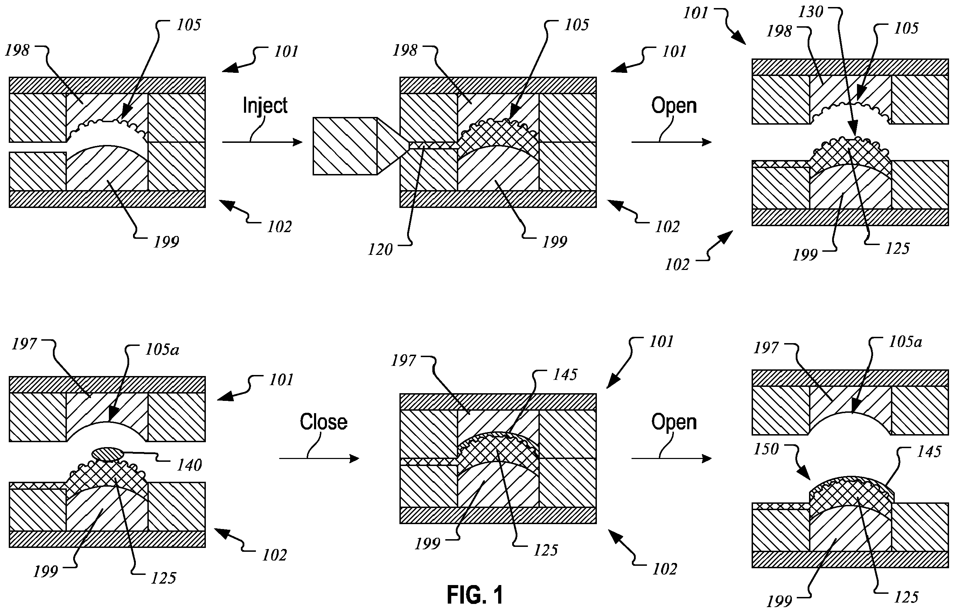

FIG. 1 is a schematic of a PIPC method for producing a lens with encapsulated microstructures, useful within the scope of the present disclosure. In a useful scope, a mold device can include a first mold side 101 and a second mold side 102, a first mold insert 198 disposed on the first mold side 101, and a second mold insert 199 disposed on the second mold side 102. The first mold side 101 and the second mold side 102 can each include a hollow portion, wherein the first mold insert 198 and the second mold insert 199 can be removeably disposed therein. The first mold insert 198 can include a contacting surface 105, wherein the contacting surface 105 is arranged proximal to the second mold side 102. The contacting surface 105 can have an overall shape that is flat or curved (as shown) or adopt any other shape desired for forming the overall shape of the microstructures. The contacting surface 105 can include a plurality of inverted microstructures that are a complementary shape to microstructures 130 on a resulting molded base lens 125 to form the microstructures 130 during molding. The second mold insert 199 can have a smooth surface or similarly include another of the contacting surface 105 having the plurality of inverted microstructures.

The first mold side 101 with the first mold insert 198 and the second mold side 102 with the second mold insert 199 can be configured to move towards one another to form a cavity or away from one another to open the mold device.

The cavity can be connected to a hollow line formed by the coupling of the first and second mold sides 101, 102. The line can be configured to receive a polymer melt 120, for example, via a screw feeder or similar polymer injector device. The polymer injector can be attached to the mold device and configured to inject the polymer melt 120 into the cavity when the first mold side 101 is coupled with the second mold side 102 to form a base lens 125 from the polymer melt 120 with the microstructures 130 based on the contacting surface 105 and a surface of the second mold insert 199 facing the cavity. The mold device can stay closed for a first predetermined length of time until the base lens 125 has formed. For a semi-finished lens, a curvature along a convex side of the lens is fixed and the concave side of the base lens 125 can be modified after molding, for example via grinding and polishing. Note that multiple lines for receiving the polymer melt 120 can be connected, such that an injection of the polymer melt 120 from a source can fill multiple mold devices with a single injection and allow for parallel fabrication of multiple lenses.

In a useful scope, a material of the base lens can be selected from the group consisting of polycarbonate, isosorbide polycarbonate, thermoplastic polyurethane, polyacrylate, polyester, copolyester, polymethacrylate, polystyrene, polyamide, polysulfone, polyphenylsulfone, polyetherimide, polypentene, polyolefin, ionomer, ethylene methacrylic acid, cyclic olefin copolymer, acrylonitrile, styrene maleic anhydride, a copolymer thereof, and a derivative or mixture thereof

In a useful scope, the base lens 125 can be further molded to form a curable layer 145 to encapsulate the microstructures 130. After the base lens 125 has cooled and the mold device is opened, the first mold insert 198 can be removed and replaced with a third mold insert 197. The third mold insert 197 can include a contacting surface 105a, wherein the contacting surface 105a of the third mold insert 197 can be smooth. It may be appreciated that the contacting surface 105a can also be microstructured to form another layer of microstructures (in which case, a fourth mold insert (not shown) can be smooth to provide the outer-most layer). In a useful scope, the first mold insert 198 can be replaced by removing the first mold insert 198 from the first mold side 101 and installing the third mold insert 197 in the previous location as the first mold insert 198. In a useful scope, the mold device can include a mold insert exchange mechanism, wherein the exchange mechanism holds a plurality of mold inserts and can immediately swap inserts without the need for an operator to remove and unseat a mold insert. The exchange mechanism can further automatically arrange the mold insert that has been swapped in at the desired distance away from the second mold insert 199 in order to achieve a desired thickness of the curable layer 145 (see below). For example, the exchange mechanism can include a rotating drum of mold inserts that can rotate mold inserts into the first mold side 101. In a useful scope, the mold device can include a third mold side (not shown) having the third mold insert 197 installed to replace the entire first mold side 101 and the first mold insert 198. For example, a rotary or cube mold can be used.

A curable coating 140 can be applied to the microstructured surface, or on top of the microstructure 130, of the base lens 125 before the mold device is closed again and the curable coating 140 is spread over the microstructure 130. Notably, in both the first and the second molding cycles, the first mold insert 198, the second mold insert 199, and the third mold insert 197 can be heated to promote viscous flow of the polymer melt 120 into the cavity and to fill the mold insert features. Furthermore, for the second molding cycle, the amount of the applied curable coating 140 can be based on feature sizes of the microstructures 130. For example, when the microstructures 130 have deep crevices and taller structures, more of the curable coating 140 can be applied to fill in the additional volume of voids, etc. Additionally, a gap or distance between the microstructures 130 and a surface of the third mold insert 197 can further determine the amount of the curable coating 140 applied to achieve a desired thickness of the resulting curable layer 145. In a useful scope, a surface temperature of the base lens 125 along the microstructures 130 can be reached before the curable coating 140 is applied. As previously described, the first molding cycle can include heating the first mold insert 198 and the second mold insert 199 to a first predetermined temperature to mold the base lens 125 based on the polymer melt 120 properties. For the second molding cycle, the third mold insert 197 and the second mold insert 199 can be heated to a second predetermined temperature and the curable coating 140 can be applied to the base lens 125 having the desired surface temperature before the mold device is closed again to spread, mold, and cure the curable coating 140. Of course, these parameters can be based on the curable coating 140 properties. After holding the molding device closed for a second predetermined length of time, the mold device can be opened to remove a coated lens 150 having the base lens 125 with the microstructures 130 encapsulated with the curable layer 145.

In a useful scope, the curable coating 140 can be an acrylate-based material. For example, the curable coating 140 can be a monofunctional (meth)acrylate, a difunctional meth(acrylate), a polyester acrylate oligomer, an epoxy modified bisphenol A epoxy, or an aliphatic urethane diacrylate. Notably, the curable coating 140 can additionally include one or more of photochromic dyes, blue cut dyes, near infrared (NIR) cut dyes, UV cut dyes, or other light filters. Based on a refractive index of the curable coating 140, the base lens 125, and any optional dye additives, the optical properties of the coated lens 150 can be adjusted. A predetermined difference or delta in refractive index between the curable coating 140 and the base lens 125 material, and a predetermined thickness of the curable coating 140 can be adjusted to preserve the optical function of the microlenses (the microstructures 130). For example, a refractive index of the curable coating 140 can be less than a refractive index of the base lens 125, or a refractive index of the curable coating 140 can be greater than a refractive index of the base lens 125.

The plurality of inverted microstructures can be used to mold, for example, refractive micro-structures or diffractive micro/nano-structures. The plurality of inverted microstructures can be an inversion of a desired final pattern be formed on the resulting lens after molding. The plurality of inverted microstructures can include microlenses or microlenslets or any other type of structure or elements having physical Z deformation/height or depth between 0.1 µm to 50 µm and width/length between 0.5 µm to 2.0 mm. These structures preferably have periodical or pseudo periodical layout, but may also have randomized positions. The preferred layout for microstructures is a grid with constant grid step, honeycomb layout, multiple concentric rings, contiguous e.g. no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20 Diopters, and light deviation is configured such that the structure may locally scatter light with angle ranging from +/- 1° to +/- 30°. A distance between structures may range from 0 (contiguous) to 3 times the structure in "X" and/or "Y" size (separate microstructures).

In the sense of the disclosure, two optical elements located on a surface of a lens substrate are contiguous if there is a path supported by said surface that links the two optical elements and if along said path one does not reach the basis surface on which the optical elements are located. According to another scope, the optical elements are contiguous over a pupil when the optical lens over said pupil comprises no refraction area having a refractive power based on a prescription for said eye of the wearer or a refraction area having a refractive power based on a prescription for said eye of the wearer consisting in a plurality of respectively independent island-shaped areas. According to another scope, the two optical elements are contiguous if there is a path linking the two optical elements along part of said path one may not measure the refractive power based on a prescription for the eye of the person. According to another scope, optical elements being contiguous can also be defined in a surfacic or surface-oriented manner. A measured surface being between 3 mm² and 10 mm² is considered. The measured surface comprises a density of "W" optical elements per mm². If in said measured surface, at least 95% of the surface, preferably 98%, has an optical power different from the surface onto which the optical elements are located, said optical elements are considered to be contiguous.

Furthermore, microstructures which form a microstructured main surface of an ophthalmic lens substrate may include lenslets. Lenslets may form bumps and/or cavities (i.e., raised or recessed lenslet structures) at the main surface they are arranged onto. The outline of the lenslets may be round or polygonal, for example hexagonal. More particularly, lenslets may be microlenses. A microlens may be spherical, toric, cylindrical, prismatic, or aspherical shapes or any combination to make a multi-element shape. A microlens may have a single focus point, or cylindrical power, or multi-focal power, or non-focusing point. Microlenses can be used to prevent progression of myopia or hyperopia. In that case, the base lens substrate comprises a base lens providing an optical power for correcting myopia or hyperopia, and the microlenses may provide respectively an optical power greater than the optical power of the base lens if the wearer has myopia, or an optical power lower than the optical power of the base lens if the wearer has hyperopia. Lenslets may also be Fresnel structures, diffractive structures such as microlenses defining each a Fresnel structure, permanent technical bumps (raised structures), or phase-shifting elements. It can also be a refractive optical element such as microprisms and a light-diffusing optical element such as small protuberances or cavities, or any type of element generating roughness on the substrate. It can also be π-Fresnel lenslets as described in US2021109379, i.e. Fresnel lenslets which phase function has π phase jumps at the nominal wavelength, as opposition to unifocal Fresnel lenses which phase jumps are multiple values of 2π. Such lenslets include structures that have a discontinuous shape. In other words, the shape of such structures may be described by an altitude function, in terms of distance from the base level of the main surface of the optical lens the lenslet belongs to, which exhibits a discontinuity, or which derivative exhibits a discontinuity. In a useful scope, the microstructure can be a branding mark, holographic mark, metasurface, or the like.

Lenslets may have a contour shape being inscribable in a circle having a diameter greater than or equal to 0.5 micrometers (µm) and smaller than or equal to 2.0 millimeters (mm). Lenslets may have a height, measured in a direction perpendicular to the main surface they are arranged onto, that is greater than or equal to 0.1 µm and less than or equal to 50 µm. Lenslets may have periodical or pseudo periodical layout but may also have randomized positions. One layout for lenslets is a grid with constant grid step, honeycomb layout, multiple concentric rings, contiguous e.g. no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20, 500, or 1000 Diopters, and light deviation is configured such that the structure may locally scatter light with angle ranging from +/- 1° to +/- 30°. A distance between structures may range from 0 (contiguous) to 3 times the structure (separate microstructures).

### EXAMPLES

Example 1 - In each cavity of a 2-cavity mold, a 6.50-base concave (CV) insert with CV microlenses on the surface was installed in the top mold half, and a 6.10 base smooth convex (CX) insert was installed in the bottom mold half. Semi-finished (SF) PC lenses, 76 mm in diameter and 9 mm in center thickness, with CX microlenses on the front surface were injection molded using the following process parameters:

**Table 1 - Molding parameters**

| | |
|---|---|
| Melt Temperature | 510°F |
| Mold Temperature | 260°F |
| Shot Size | 3.00 inches |
| Injection Speed | 0.1 inch per second |
| Packing Pressure | 800 psi |
| Hold Time | 100 seconds |
| Cooling Time | 4 minutes |
| Primary Clamping Force | 150 tons |

At the end of cooling, the mold was opened to expose the convex surfaces of the molded lenses. The 6.50-base microstructured CV inserts in the top mold half were replaced with smooth CV inserts of identical base curve. One drop, or 0.15 grams, of an acrylate based coating was then dispensed onto the center of each lens using a syringe. Subsequently, a secondary clamping force of 150 tons (the same as the primary clamping force in this case) was applied to re-close the mold to spread out the coating evenly across the lens surfaces. After 1 minute, the mold was reopened to eject the lenses. The microlenses on the front (CX) surfaces of the SF lenses were fully encapsulated by the coating resulting in a smooth surface.

Example 2 - Two 5.50-base concave inserts with CV microlenses on the surface were used to mold SF PC lenses, 76 mm in diameter and 8 mm in center thickness, with CX microlenses on the front surface using the same process parameters listed in Example 1, except the shot size was 2.60 inches.

When the mold was opened after injection, the 5.50-base microstructured CV inserts in the top mold half were replaced with smooth 5.50-base CV inserts. Similar to Example 1, the microlenses on the front surfaces of the SF lenses were fully encapsulated by the coating.

Notably, benefits of the disclosed method include: i) the ability to make Transitions^{®} Stellest^{™} lenses, and other photochromic lenses with different µ-structures; ii) the ability to coat new myopia control lens designs (such as contiguous µ-lens and Pi-Fresnel) that could not be coated by standard methods such as dip or spin due to loss of optical design; iii) the ability to include light filters in PIPC coating such as blue cut; and iv) the ability to avoid the need for additional standard hard coatings for scratch resistance.

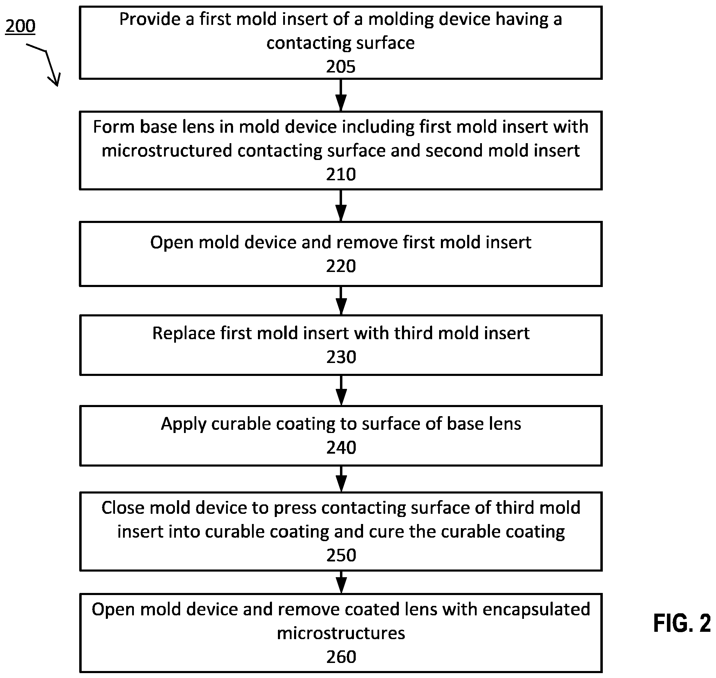

FIG. 2 is an exemplary flow chart for a method 200 of forming a lens, useful within the scope of the present disclosure. In step 205, the first mold insert 198 in the molding device can be provided, the first mold insert 198 having the contacting surface 105, the contacting surface 105 including the plurality of inverted microstructures that are a complementary shape to the microstructures 130. In step 210, the base lens 125 can be formed by closing the mold device and injecting the polymer melt 120 into the cavity. In step 220, the mold device can be opened and the base lens can be cooled. The first mold insert 198 can be removed. In step 230, the first mold insert 198 is replaced with the third mold insert 197 on the first mold side 101 in the mold device. In step 240, the curable coating 140 can be applied to the microstructures 130 formed on the base lens 125 upon the surface temperature of the base lens 125 reaching a predetermined temperature. In step 250, the mold device is closed once again and the curable coating 140 is spread and cured at the elevated temperature the third mold insert 197 and the second mold insert 198 are heated to. In step 260, the resulting coated lens 150 can be removed after the third mold insert 197 is uncoupled from the second mold insert 199. The curable coating 140 can be cured to form the curable layer 145 that encapsulates the microstructures 130 on the surface of the base lens 125. An optical element can be produced, wherein the optical element is an ophthalmic lens, in particular a spectacle lens.

In the preceding description, specific details have been set forth, such as a particular geometry of a processing system and descriptions of various components and processes used therein. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than specifically described unless expressly indicated otherwise. Various additional operations may be performed and/or described operations may be omitted.

Those skilled in the art will also understand that there can be many variations made to the operations of the techniques explained above while still achieving the same objectives of the disclosure. Such variations are intended to be covered by the scope of this disclosure. As such, the foregoing descriptions of embodiments are not intended to be limiting. Rather, any limitations to embodiments are presented in the following claims.

Embodiments of the present disclosure may also be as set forth in the following parentheticals.
(1) A method of forming an optical lens, comprising providing a first mold insert (198) of a molding device having a contacting surface (105), the contacting surface (105) including a plurality of inverted microstructures disposed on the contacting surface (105), each microstructure of the plurality of inverted microstructures having a shape inversely related to a shape of microstructures (130) on a surface of a base lens (125); replacing the first mold insert (198) with a second mold insert (197) having a contacting surface (105a) thereof; applying a curable coating (140) to a surface of the base lens (125) having the microstructures (130) formed thereon; pressing the contacting surface (105a) of the second mold insert (197) into at least a portion of the curable coating (140) applied to the surface of the base lens (125); and curing the curable coating (140) into a curable layer (145), the microstructures (130) being substantially entirely encapsulated in the curable layer (145).
(2) The method of (1), further comprising forming the base lens (125) in the mold device including the first mold insert (198) having the contacting surface (105).
(3) The method of either (1) or (2), wherein replacing the first mold insert (198) further comprises opening the mold device while leaving the base lens (125) in a cavity of the mold device.
(4) The method of any one of (1) to (3), wherein a material of the base lens (125) is selected from the group consisting of polycarbonate, isosorbide polycarbonate, thermoplastic polyurethane, polyacrylate, polyester, copolyester, polymethacrylate, polystyrene, polyamide, polysulfone, polyphenylsulfone, polyetherimide, polypentene, polyolefin, ionomer, ethylene methacrylic acid, cyclic olefin copolymer, acrylonitrile, styrene maleic anhydride, a copolymer thereof, and a derivative or mixture thereof.
(5) The method of any one of (2) to (4), wherein the base lens (125) is formed via injection molding at an injected polymer melt temperature at least 200°F higher than the glass transition temperature of the base lens (125).
(6) The method of any one of (1) to (5), wherein the first mold insert (198) and the mold device is heated to a temperature between 5°F lower than a glass transition temperature of the base lens (125) and 50°F lower than the glass transition temperature of the base lens (125).
(7) The method of any one of (1) to (6), wherein applying the curable coating (140) to the surface of the base lens (125) further comprises applying the curable coating (140) to the surface of the base lens (125) upon a surface temperature of the base lens (125) reaching a predetermined base lens (125) surface temperature.
(8) The method of (7), wherein the predetermined base lens (125) surface temperature is between 30°F and 300°F.
(9) The method of any one of (1) to (8), wherein the curable coating (140) further comprises photochromic dyes, blue cut dyes, near infrared cut dyes, UV cut dyes, or other light filters.
(10) The method of any one of (1) to (9), wherein the curable coating (140) is an acrylate based coating.
(11) The method of any one of (1) to (10), wherein the second mold insert (197) has a smooth contacting surface (105a) thereof.
(12) The method of any one of (1) to (11), wherein the second mold insert (197) has a contacting surface (105a) including a second pattern of inverted microstructures.
(13) The method of (12), further comprising repeating the steps of replacing the first mold insert (198) with a third mold insert having a patterned contacting surface thereof; applying the curable coating (140) to a most recently formed surface; and pressing the contacting surface (105a) of the third mold insert into at least a portion of the curable coating (140) applied to form multiple microstructured layers on the base lens (125).
(14) An optical element obtained according to the method of any of (1) to (13), wherein the optical element is an ophthalmic lens.
(15) A mold device, comprising: a first mold insert (198) on a first mold side (101), the first mold insert (198) including a contacting surface (105) having a plurality of inverted microstructures formed thereon; a second mold insert (199) on a second mold side (102); and a third mold insert (197) having a smooth contacting surface (105a), wherein the first mold insert (198) is replaceable with the third mold insert (197) on the first mold side (101).
(16) The method of any one of (1) to (14), wherein the first mold insert (198) and the mold device is heated to at least 260°F and a packing pressure of at least 800 psi is applied.
(17) The method of any one of (1) to (14), wherein the base lens (125) is at least 50 mm in diameter and at least 1.0 mm in center thickness, and at least 0.05 grams, or at least 0.10 grams, or more preferably at least 0.15 grams, of a single drop of the curable coating (140) is applied to a center of the base lens (125).
(18) The method of (17), wherein a clamping force of 150 tons was applied during the pressing of the contacting surface (105a) of the second mold insert (197) into the at least a portion of the curable coating (140) for a duration of 1 minute.
(19) The method of any one of (1) to (14), wherein replacing the first mold insert (198) with the second mold insert further comprises replacing a first mold side (101) including the first mold insert (198) with a second mold side including the second mold insert (197).

## Claims

1. A method of forming an optical lens, comprising:
providing a first mold insert of a molding device having a contacting surface, the contacting surface including a plurality of inverted microstructures disposed on the contacting surface, each microstructure of the plurality of inverted microstructures having a shape inversely related to a shape of microstructures on a surface of a base lens;
replacing the first mold insert with a second mold insert having a contacting surface thereof;
applying a curable coating to a surface of the base lens having the microstructures formed thereon;
pressing the contacting surface of the second mold insert into at least a portion of the curable coating applied to the surface of the base lens; and
curing the curable coating into a curable layer, the microstructures being substantially entirely encapsulated in the curable layer.

2. The method of claim 1, further comprising forming the base lens in the mold device including the first mold insert having the contacting surface.

3. The method of claim 1, wherein replacing the first mold insert further comprises opening the mold device while leaving the base lens in a cavity of the mold device.

4. The method of claim 1, wherein a material of the base lens is selected from the group consisting of polycarbonate, isosorbide polycarbonate, thermoplastic polyurethane, polyacrylate, polyester, copolyester, polymethacrylate, polystyrene, polyamide, polysulfone, polyphenylsulfone, polyetherimide, polypentene, polyolefin, ionomer, ethylene methacrylic acid, cyclic olefin copolymer, acrylonitrile, styrene maleic anhydride, a copolymer thereof, and a derivative or mixture thereof.

5. The method of claim 2, wherein the base lens is formed via injection molding at an injected polymer melt temperature at least 200°F higher than the glass transition temperature of the base lens.

6. The method of claim 1, wherein the first mold insert and the mold device is heated to a temperature between 5°F lower than a glass transition temperature of the base lens and 50°F lower than the glass transition temperature of the base lens

7. The method of claim 1, wherein applying the curable coating to the surface of the base lens further comprises applying the curable coating to the surface of the base lens upon a surface temperature of the base lens reaching a predetermined base lens surface temperature.

8. The method of claim 7, wherein the predetermined base lens surface temperature is between 30°F and 300°F.

9. The method of claim 1, wherein the curable coating further comprises photochromic dyes, blue cut dyes, near infrared cut dyes, UV cut dyes, or other light filters.

10. The method of claim 1, wherein the curable coating is an acrylate based coating.

11. The method of claim 1, wherein the second mold insert has a smooth contacting surface thereof.

12. The method of claim 1, wherein the second mold insert has a contacting surface including a second pattern of inverted microstructures.

13. The method of claim 12, further comprising
repeating the steps of
replacing the first mold insert with a third mold insert having a patterned contacting surface thereof;
applying the curable coating to a most recently formed surface; and
pressing the contacting surface of the third mold insert into at least a portion of the curable coating applied to form multiple microstructured layers on the base lens.

14. An optical element obtained according to the method of any of the preceding claims 1 to 13, wherein the optical element is an ophthalmic lens.

15. A mold device, comprising:
a first mold insert on a first mold side, the first mold insert including a contacting surface having a plurality of inverted microstructures formed thereon;
a second mold insert on a second mold side; and
a third mold insert having a smooth contacting surface,
wherein the first mold insert is replaceable with the third mold insert on the first mold side.
